# EUROPÄISCHE PATENTSCHRIFT

(11) **EP 2 541 541 B1**
(45) Veröffentlichungstag und Bekanntmachung des Hinweises auf die Patenterteilung: **15.10.2014**
(21) Anmeldenummer: 11005343.6
(22) Anmeldetag: 30.06.2011
(51) Int. Cl.: G10K 11/24, G01N 29/24

(54) **Anordnung zur zerstörungsfreien Überwachung oder Prüfung von Bauteilen mittels Schallwellenanalyse**
Assembly for non-destructive monitoring or inspection of components using sound wave analysis
Agencement de contrôle ou de surveillance non destructif de composants au moyen d'une analyse des ondes sonores

(43) Veröffentlichungstag der Anmeldung: 02.01.2013
(73) Patentinhaber: Fraunhofer Gesellschaft zur Förderung der angewandten Forschung e.V., 80686 München (DE)
(72) Erfinder: Klesse, Thomas, M., Sc., 01157 Dresden (DE); Lieske, Uwe, Dipl.-Ing., 01109 Dresden (DE); Weihnacht, Bianca, 01309 Dresden (DE); Frankenstein, Bernd, Dipl.-Ing., 01457 Ullersdorf (DE)
(74) Vertreter: Pfenning, Meinig & Partner GbR

(56) Entgegenhaltungen:
- EP-A1- 2 266 714
- US-A- 4 352 038
- US-A- 4 392 380
- US-A- 4 461 178
- US-A- 4 586 381

## Beschreibung

Die Erfindung betrifft eine Anordnung zur zerstörungsfreien Überwachung oder Prüfung von Bauteilen mittels Schallwellenanalyse. Dabei kann eine Schallwellenanalyse sowohl passiv, wie auch aktiv an Bauteilen durchgeführt werden. Es besteht die Möglichkeit Schallwellen in einem Bauteil aktiv anzuregen und die durch das Bauteil geführten Schallwellen mit demselben oder einem anderen Schallwellenwandler zu detektieren. Es können aber auch passiv durch den normalen Betrieb im Bauteil entstehende Schallwellen mit der Erfindung detektiert werden.

Nach dem Stand der Technik werden Schallwellenwandler eingesetzt, die unmittelbar auf die Oberfläche von zu prüfenden Bauteilen aufgesetzt werden oder die über ein Schallwellen leitendes Medium oder Element zur Schallwellenübertagung ausgebildet sind. Insbesondere bei Anwendungen, bei denen hohe Temperaturen, aggressive Umweltbedingungen oder eine Explosionsgefährdung beachtet werden müssen gibt es häufig auch Probleme beim Einsatz von Schallwellenanalysetechnik, wegen der Zugänglichkeit und insbesondere dann, wenn eine permanente Überwachung oder eine zyklische Prüfung über lange Zeiträume durchgeführt werden soll bzw. muss.

So treten beispielsweise an Bauteilen und Rohrleitungen von Kraftwerken Temperaturen oberhalb 600 °C auf, was eine Überwachung oder Prüfung des Zustandes erheblich erschwert. Bei diesen Bauteilen können Ermüdungsrisse, Kriechporen oder ein Werkstoffabtrag im Laufe des Betriebs auftreten, so dass eine frühzeitige Erkennung gewünscht wird. So werden bisher solche Fehler/Defekte durch eine Gefügeabdrucktechnik (Replica) ermittelt. Dies ist aber während des normalen Betriebes bei den herrschenden Bedingungen, insbesondere den hohen Temperaturen nicht möglich. Für die Abkühlung ist auch eine sehr große Zeit erforderlich, bevor eine Prüfung vorgenommen werden kann.

Bei vielen Bauteilen ist auch ein Eingriff oder Angriff von außen nicht zulässig. So können keine zusätzlichen Elemente, wie Koppelelemente oder Adapter stoffschlüssig an Bauteilen befestigt werden. So halten Kleb- oder auch Lötverbindungen den hohen Temperaturen nicht stand. Zumindest verändert sich das Übertragungsverhalten von Schallwellen bei den hohen Temperaturen. Eine Schweißverbindung scheidet aber wegen der unzulässigen Beeinflussung des Bauteils, insbesondere in sensiblen mechanisch stark beanspruchten Bereichen von Bauteilen, wegen der daraus resultierenden lokalen Werkstoffveränderungen, aus.

Bei vielen Anwendungen, insbesondere für die Bestimmung der Restlebensdauer, ist eine permanente Überwachung oder eine zyklische Prüfung in mehr oder weniger großen Zeitabständen über einen langen Zeitraum erforderlich. Im letztgenannten Fall müssen dann jeweils vor Durchführung einer Prüfung vorbereitende Maßnahmen, wie zum Beispiel das Freilegen der Oberfläche eines Bauteils durch Entfernung einer Isolation oder sonstigen Schutzelemente durchgeführt werden, was einen erheblichen zusätzlichen Aufwand darstellt.

So ist aus EP 2 266 714 A1 eine Ultraschallprüfvorrichtung bekannt, mit der zerstörungsfreie Prüfungen durchgeführt werden können. Dabei werden streifenförmige Elemente zur Schallübertragung eingesetzt.

US 4,352,038 A betrifft den Einsatz von metallischen Wellenleitern zur Übertragung von Schallwellen.

In US 4,392,380 A ist der Einsatz von Spannvorrichtungen bei der Ultraschallwellenübertragung beschrieben.

Es ist daher Aufgabe der Erfindung, Möglichkeiten für eine einfache, kostengünstige sowie zerstörungsfreie Überwachung oder Prüfung von Bauteilen, die permanent oder häufig in kleinen Zeitabständen an Bauteilen durch geführt werden soll, anzugeben.

Erfindungsgemäß wird diese Aufgabe mit einer Anordnung, die die Merkmale des Anspruch 1 aufweist, gelöst. Vorteilhafte Weiterbildungen und Ausgestaltungen der Erfindung können mit in untergeordneten Ansprüchen bezeichneten Merkmalen realisiert werden.

Bei der erfindungsgemäßen Anordnung sind eine elektronische Signalverarbeitungseinheit, mindestens ein Schallwellenwandler, mindestens ein Wellenleiter für die Übertragung von Schallwellen zu und/oder von einem zu überwachenden oder zu prüfenden Bauteil und eine Spannvorrichtung zur Fixierung des jeweiligen Wellenleiters am Bauteil vorhanden. Der eine oder mehrere Wellenleiter ist oder sie sind draht- oder faserförmig ausgebildet. Der oder die Wellenleiter wird/werden mittels Spannvorrichtung(en) flächig in einem Detektionsbereich auf der Oberfläche des Bauteils aufliegend kraftschlüssig befestigt oder sie können damit am Bauteil auf der Oberfläche befestigt werden.

Eine bei der Erfindung einsetzbare Spannvorrichtung kann in Form einer Spannschelle oder eines Spannbandes ausgebildet sein. Zwischen der Spannschelle oder dem Spannband und dem Bauteil kann der eine Wellenleiter oder es können auch mehrere Wellenleiter auf der Oberfläche des Bauteils klemmend gehalten werden.

Dabei hat die jeweilige Spannvorrichtung mindestens eine Kontur, beispielsweise einen konkav ausgebildeten Bereich, in den ein Wellenleiter eingelegt und so auf der Oberfläche des Bauteils lagefixiert gehalten werden kann. Mit der Spannvorrichtung sollte eine ausreichend große Anpresskraft auf den Wellenleiter ausgeübt werden, die seine Bewegung in alle Richtungen verhindert. Üblicherweise genügen wenige MPa unterhalb von 10 MPa, um eine ausreichend sichere Fixierung und Ankopplung von Wellenleitern zu erreichen.

Wellenleiter sollten spielfrei auf der Oberfläche des Bauteils mittels einer Spannvorrichtung befestigt sein oder dort befestigt werden können. Es sollten dabei zumindest schwingende Bewegungen von Wellenleitern vermieden werden können, die zu einer Beeinflussung der für die Schallwellenanalyse genutzten Schallwellen, die lediglich über den Wellenleiter übertragen werden sollen, führen könnten.

Wellenleiter können aus einem Metall, einer Metalllegierung, einem Polymer oder einem Glas gebildet sein. Sie sollten flexibel verformt, bevorzugt gebogen werden können. Dadurch kann die Anbringung des/der Wellenleiter an verschiedenen Positionen an einem Bauteil, unabhängig von der Position der übrigen Bestandteile der erfindungsgemäßen Anordnung, die für den Betrieb erforderlich sind, erleichtert und flexibel entsprechend des jeweils gewünschten Detektionsbereichs am Bauteil gewählt werden.

Wellenleiter sollten aus dem Werkstoff des zu prüfenden oder zu überwachenden Bauteils oder einem Werkstoff mit zumindest annähernd gleicher Schalldämpfung, wie der Werkstoff des Bauteils gebildet sein. Dadurch kann das Schallwellenübertragungsverhalten vom Bauteil zu Wellenleiter oder umgekehrt verbessert werden, was die Ein- und Auskoppelverhältnisse von Schallwellen betrifft. Zumindest sollte auch die Geschwindigkeit, mit der Schallwellen im Bauteil und im Wellenleiter übertragen werden, bekannt sein und bei der Schallwellenanalyse berücksichtigt werden können.

Günstig ist es, wenn Wellenleiter über jeweils einen Exponentialtrichter mit einem Schallwellenwandler verbunden sind, um eine verbesserte Ein- oder Auskopplung von Schallwellen in bzw. aus einem Wellenleiter in bzw. aus dem jeweiligen Schallwellenwandler zu erreichen. Die Oberflächenform des Exponentialtrichters ist dafür optimiert. Die jeweilige Stirnseite eines Wellenleiters, die in einen Exponentialtrichter eingeführt wird, kann entsprechend komplementär konturiert sein. Dabei ist neben einer Steckverbindung auch eine Schweißverbindung dieser beiden Elemente der Anordnung möglich.

Wellenleiter sollten möglichst aus einem homogenen Werkstoff und auch als homogenes Gebilde ausgebildet sein. Ein Wellenleiter, beispielsweise ein Metalldraht sollte aber aus einem einzigen Werkstoff, der zur Übertragung von Schallwellen geeignet ist, hergestellt werden. Es sollte auch der für die Leitung von Schallwellen genutzte Bereich von Wellenleitern einen zumindest nahezu konstanten Querschnitt, was die Dimensionierung und die geometrische Querschnittsgestaltung betrifft, aufweisen, um unerwünschte Einflüsse bei der Leitung von Schallwellen, insbesondere Reflexionen zu vermeiden. Es sollten auch keine Mehrzahl dünner miteinander verdrillter Einzeldrähte für Wellenleiter genutzt werden, da hierdurch eine undefinierbare Schallwellenübertragung auftreten würde.

Wellenleiter sollten eine Querschnittsfläche von mindestens 0,1 mm² und/oder einen Außendurchmesser von mindestens 0,25 mm aufweisen. Die Größe der Querschnittsfläche bzw. des Außendurchmessers wird dabei im Wesentlichen von den mechanischen Parametern begrenzt, die je nach eingesetztem Wellenleiterwerkstoff zumindest eine ausreichende Biegbarkeit berücksichtigen sollen.

Bei der Erfindung können mehrere Wellenleiter jeweils parallel zueinander ausgerichtet, mittels Spannvorrichtung(en) in einem Bereich auf der Oberfläche des Bauteils befestigt oder befestigbar sein. Dies trifft sowohl auf mehrere Wellenleiter, die mit einer gemeinsamen Spannvorrichtung an einem Bauteil fixiert werden können, aber auch auf mehrere Wellenleiter zu, die mit mehreren Spannvorrichtungen in einer Entfernung voneinander am Bauteil fixiert sind.

Bei der Erfindung können die Positionen an denen Wellenleiter an einem Bauteil fixiert sind so gewählt werden, dass zumindest die Abstände dieser Positionen zueinander bekannt sind und bei der Schallwellenanalyse, beispielsweise bei der Bestimmung von Schallwellenlaufzeiten, Schallwellenlaufzeitdifferenzen oder der Ausbreitungsgeschwindigkeit berücksichtigt werden können. Dies trifft auch auf den Abstand zu bestimmten vorgebbaren Detektionsbereichen des jeweiligen Bauteils zu.

Die Erfindung zeichnet sich durch einen äußerst einfachen Aufbau aus. Sie kann sehr flexibel an den unterschiedlichsten Bauteilen und den unterschiedlichsten Positionen an einem Bauteil eingesetzt werden. Es ist ein nachträglicher Einbau an Bauteilen oder ein ggf. erforderlicher Austausch leicht möglich.

Es kann vollständig trocken gearbeitet und trotz Verzicht auf z.B. gelförmiges Koppelmedium eine sehr gute Schallwellenübertragung erreicht werden. Es ist auch der Explosionsschutz erfüllt, da keine elektrisch betriebenen Komponenten oder Elemente in einem für Explosionen kritischen Bereich eines Bauteils angeordnet sein müssen und eine kritische Funkenbildung dort vermieden werden kann.

Spannvorrichtungen können aus verschiedensten Werkstoffen oder Materialien hergestellt sein, deren thermischer Ausdehnungskoeffizient bevorzugt kleiner, als der des Bauteilwerkstoffs ist. Es ist lediglich eine ausreichende Zugfestigkeit und ggf. bei Bedarf einer Berücksichtigung eine ausreichende Temperaturbeständigkeit erforderlich. Spannschellen oder Spannbänder können beispielsweise aus einem geeigneten Metall bestehen und das Spannen mit herkömmlichen Schraubverbindungen oder Spannverschlüssen erreicht werden.

An einem Bauteil können auch unterschiedliche Wellenleiter, die beispielsweise aus unterschiedlichen Werkstoffen gebildet sind, an einem zu überwachenden oder zu prüfenden Bauteil gemeinsam und gleichzeitig eingesetzt werden. Dadurch kann eine vergleichende Schallwellenanalyse unter Berücksichtigung der unterschiedlichen Schalldämpfung und/oder Schallgeschwindigkeit der jeweiligen Werkstoffe, die für die Wellenleiter gewählt worden sind, durchgeführt werden.

Mit der erfindungsgemäßen Anordnung kann eine Schallwellenanalyse von Schallwellen mit geringer Frequenz bis zu einer Frequenz im Bereich um 1 MHz durchgeführt werden. Es können dabei die unterschiedlichsten an sich bekannten Auswertungen durchgeführt werden.

Es können an einem Bauteil ausschließlich für eine Detektion nutzbare Schallwellenwandler eingesetzt werden. Es kann aber auch mindestens ein aktiv betreibbarer Schallwellenwandler, mit dem Schallwellen in das Bauteil eingekoppelt und dann im Bauteil reflektierte Schallwellen wieder detektiert werden können, vorhanden sein. Ein solcher Schallwellenwandler kann aber auch in Kombination mit passiven Schallwellenwandlern eingesetzt werden. Mit den passiven Schallwellenwandlern kann dann beispielsweise eine fehler- oder defektbedingt aufgetretene Laufzeitdifferenz erfasst und bei mindestens drei in bekanntem Abstand angeordneten solcher Schallwandler mit einem aktiv betriebenen Schallwellenwandler auch die Position eines Fehlers/Defekts ermittelt werden.

Nachfolgend soll die Erfindung beispielhaft näher erläutert werden.

Dabei zeigen:
Figur 1 in schematischer Form ein Beispiel einer erfindungsgemäßen Anordnung an einem rohrförmigen Bauteil;
Figur 2 in schematischer Form ein weiteres Beispiel an einem Strangprofil als Bauteil;
Figur 3 in schematischer Form ein weiteres Beispiel einer erfindungsgemäßen Anordnung an einem rohrförmigen Bauteil;
Figur 4 einen Schnitt durch ein Beispiel, bei dem ein Wellenleiter an einem rohrförmigen Bauteil fixiert ist und
Figur 5 eine Schnittdarstellung durch ein Beispiel, bei dem vier Wellenleiter an einem rohrförmigen Bauteil fixiert sind.

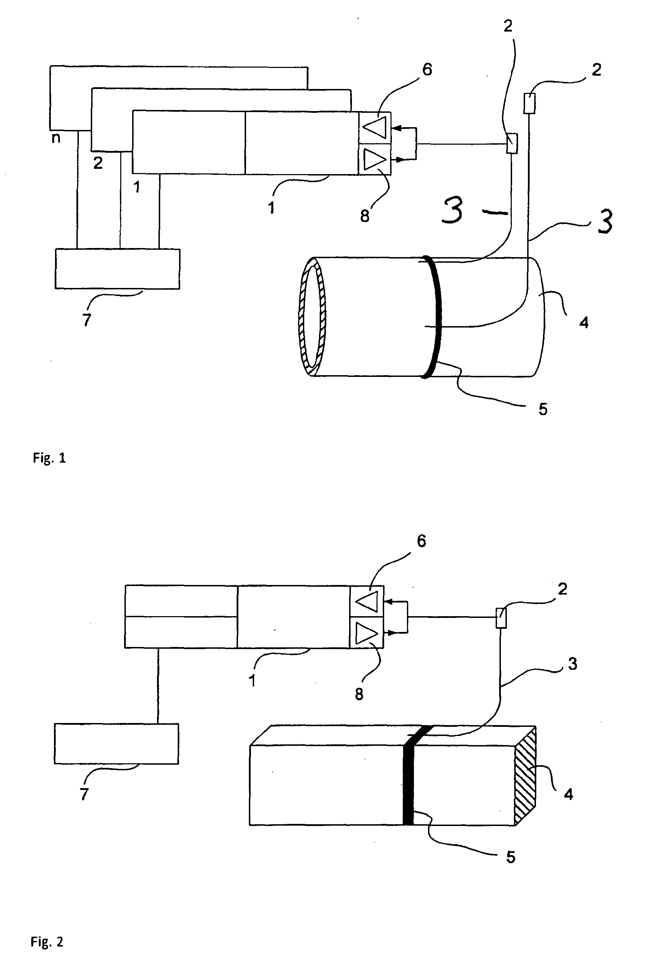

In Figur 1 ist ein Beispiel einer erfindungsgemäßen Anordnung zur Überwachung eines rohrförmigen Bauteils 4 aus Stahl gezeigt. Um das Bauteil 4 ist eine Spannschelle aus Stahl, als Spannvorrichtung für bei diesem Beispiel zwei Wellenleiter 3, geschlungen. Die Wellenleiter 3 sind aus Stahl gebildet und weisen einen Außendurchmesser von 1 mm auf. Dadurch können die Wellenleiter 3 leicht gebogen werden. Sie sind im Bereich, der unterhalb der Spannvorrichtung 5 liegt, parallel zueinander ausgerichtet und stehen in gleicher Länge über den Rand der Spannvorrichtung 5 über. Sie können auch so befestigt sein, dass sie bündig mit der Kante des Randes der Spannvorrichtung 5 abschließen. Die Wellenleiter 3 werden mit einem Druck von 5 MPa gegen die Oberfläche des Bauteils 4 gedrückt.

An den gegenüberliegenden Enden sind die Wellenleiter 3 in einen Exponentialtrichter eingeführt und mit diesem verschweißt. Am nicht gezeigten Exponentialtrichter ist jeweils ein Schallwellenwandler 2 befestigt in den Schallwellen aus dem Wellenleiter 3 aus oder in den Wellenleiter 3 eingekoppelt werden können.

Die Schallwellenwandler 2 sind mit einer elektronischen Signalverarbeitungseinheit 1 verbunden, in der eine Schallwellenanalyse der über die Wellenleiter 3 vom Bauteil 4 übertragenen Schallwellenmesssignale durchgeführt werden kann. Zwischen den Schallwellenwandlern 2, bei denen es sich um bekannte piezoelektrische Wandler handeln kann, und der elektronischen Signalverarbeitungseinheit 1 ist bei diesem Beispiel eine Verstärkereinheit 6 und 8 für die Schallwellenmesssignale und die Anregung von Schallwellen im aktiven Betrieb vorhanden. Es ist hier auch eine Anzeigeeinheit 7 vorhanden, mit der die Überwachungsergebnisse oder gar ein aufgetretener Fehler/Defekt optisch angezeigt werden können.

Das in Figur 2 gezeigte Beispiel zeigt ein geringfügig abgewandeltes Beispiel, bei dem lediglich ein Wellenleiter 3 mit einem Schallwellenwandler 2 an einem Strangprofil aus Aluminium als Bauteil 4 mit einer Spannvorrichtung 5, die als Spannband aus Stahl ausgebildet ist, befestigt ist. Der Wellenleiter 3 ist ebenfalls aus Aluminium und hat einen Außendurchmesser von 1,5 mm. Er wird mit dem Spannband 5 mit 3 MPa gegen die Oberfläche des Bauteils 4 gedrückt.

Der Schallwellenwandler 2 kann als rein passiver Detektor betrieben werden. Es besteht aber auch die Möglichkeit ihn als aktiven intermittierend betriebenen Schallwellenwandler 2 zu nutzen und seine innerhalb des Bauteils 4 reflektierten Schallwellen für eine Schallwellenanalyse über den Wellenleiter 3, den Schallwellenwandler 2 zur elektronischen Signalverarbeitungseinheit 1 zu führen.

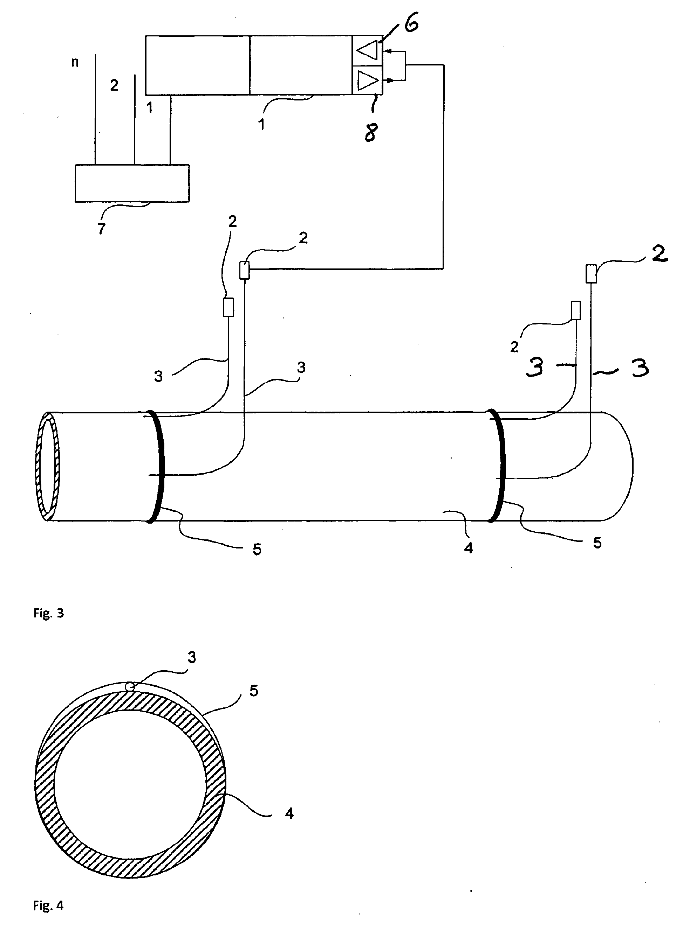

Das in Figur 3 gezeigte Beispiel entspricht in wesentlichen Punkten dem Beispiel von Figur 1. Es sind lediglich zwei solche Spannvorrichtungen 5 in einem Abstand zueinander am rohrförmigen Bauteil 4 vorhanden, mit denen Wellenleiter 3 an der Oberfläche des Bauteils 4 befestigt sind. Im Übrigen treffen die Angaben zum Beispiel nach Figur 1 auch auf dieses Beispiel zu.

In Figur 4 ist ein Schnitt eines Beispiels gezeigt, bei dem ein Wellenleiter 3 an einem rohrförmigen Bauteil 4 mit einer Spannvorrichtung 5, die das Bauteil 4 umschließt, fixiert ist.

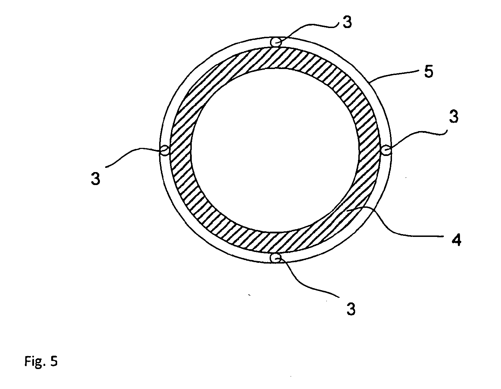

Figur 5 zeigt eine Schnittdarstellung durch ein Beispiel, bei dem vier Wellenleiter 3 an einem rohrförmigen Bauteil 4 fixiert sind, Die Wellenleiter 3 sind dabei äquidistant oder mit gleichen Winkelabständen zueinander über den Umfang verteilt mit der Spannvorrichtung 5, die das Bauteil 4 mit den Wellenleitern 3 umschließt, angeordnet. Ansonsten treffen auch hier die Angaben, die zu den anderen Beispielen gemacht worden sind, zu.

## Patentansprüche

1. Anordnung zur zerstörungsfreien Überwachung oder Prüfung von Bauteilen mittels Schallwellenanalyse, umfassend eine elektronische Signalverarbeitungseinheit (1), mindestens einen Schallwellenwandler (2), mindestens einen Wellenleiter (3) für die Übertragung von Schallwellen zu und/oder von einem zu überwachenden oder zu prüfenden Bauteil (4) und mindestens eine Spannvorrichtung (5) zur Fixierung des jeweiligen Wellenleiters (3) am Bauteil (4); wobei
der/die Wellenleiter (3) draht- oder faserförmig ausgebildet ist und mittels der Spannvorrichtung (5), die in Form einer Spannschelle oder eines Spannbandes ausgebildet ist, flächig in einem Detektionsbereich spielfrei und parallel zur Oberfläche des Bauteils (4) zwischen der Spannvorrichtung (5) auf der Oberfläche des Bauteils (4) aufliegend kraftschlüssig befestigt oder befestigbar ist und
an der Spannvorrichtung mindestens eine Kontur ausgebildet ist, in die ein Wellenleiter (3) auf der Oberfläche des Bauteils (4) einlegbar und lagefixiert gehalten ist.

2. Anordnung nach Anspruch 1, **dadurch gekennzeichnet, dass** ein Wellenleiter (3) aus einem Metall, einer Metalllegierung, einem Polymer oder einem Glas gebildet ist.

3. Anordnung nach einem der vorhergehenden Ansprüche, **dadurch gekennzeichnet, dass** ein Wellenleiter (3) aus dem Werkstoff des zu prüfenden oder zu überwachenden Bauteils (4) oder einem Werkstoff mit zumindest annähernd gleicher Schalldämpfung, wie der Werkstoff des Bauteils (4) gebildet ist.

4. Anordnung nach einem der vorhergehenden Ansprüche, **dadurch gekennzeichnet, dass** der/die Wellenleiter (3) über einen Exponentialtrichter mit einem Schallwellenwandler (2) verbunden ist/sind.

5. Anordnung nach einem der vorhergehenden Ansprüche, **dadurch gekennzeichnet, dass** der/die Wellenleiter (3) durch Biegen verformbar ist/sind.

6. Anordnung nach einem der vorhergehenden Ansprüche, **dadurch gekennzeichnet, dass** der/die Wellenleiter (3) aus einem homogenen Werkstoff als homogenes Gebilde gebildet ist.

7. Anordnung nach einem der vorhergehenden Ansprüche, **dadurch gekennzeichnet, dass** der/die Wellenleiter (3) eine Querschnittsfläche von mindestens 0,1 mm² und/oder einen Außendurchmesser von mindestens 0,25 mm aufweist/aufweisen.

8. Anordnung nach einem der vorhergehenden Ansprüche, **dadurch gekennzeichnet, dass** mehrere Wellenleiter (3) jeweils parallel zueinander ausgerichtet, mittels Spannvorrichtung(en) (5) in einem Bereich auf der Oberfläche des Bauteils (4) befestigt oder befestigbar sind.

9. Anordnung nach einem der vorhergehenden Ansprüche, **dadurch gekennzeichnet, dass** die Spannvorrichtung(en) aus einem Werkstoff oder Materiai hergestellt ist, dessen/deren thermischer Ausdehnungskoeffizient kleiner als der des Bauteilwerkstoffs ist.

## Claims

1. An arrangement for the non-destructive monitoring or testing of components by means of sound-wave analysis, comprising an electronic signal processing unit (1), at least one sound-wave transducer (2), at least one waveguide (3) for the transmission of sound waves to and/or from a component (4) which is to be monitored or tested, and at least one clamping device (5) for fixing the respective waveguide (3) to the component (4); wherein
the waveguide(s) (3) is/are in wire or fibre form and, by means of the clamping device (5), which is in the form of a clamp or a clamping strip, is/are or can be fastened nonpositively, lying on the surface of the component (4), flat in a detection region without play and parallel to the surface of the component (4) between the clamping device (5), and
at least one contour is formed on the clamping device, into which contour a waveguide (3) can be placed and held in a fixed position on the surface of the component (4).

2. An arrangement according to Claim 1, **characterised in that** a waveguide (3) is formed from a metal, a metal alloy, a polymer or a glass.

3. An arrangement according to one of the preceding claims, **characterised in that** a waveguide (3) is formed from the material of the component (4) which is to be tested or monitored, or from a material with at least approximately the same sound dampening as the material of the component (4).

4. An arrangement according to one of the preceding claims, **characterised in that** the waveguide(s) (3) is/are connected to a sound-wave transducer (2) via an exponential horn.

5. An arrangement according to one of the preceding claims, **characterised in that** the waveguide(s) (3) can be deformed by bending.

6. An arrangement according to one of the preceding claims, **characterised in that** the waveguide(s) (3) is/are formed as a homogeneous structure from a homogeneous material.

7. An arrangement according to one of the preceding claims, **characterised in that** the waveguide(s) (3) has/have a cross-sectional surface area of at least 0.1 mm² and/or an external diameter of at least 0.25 mm.

8. An arrangement according to one of the preceding claims, **characterised in that** a plurality of waveguides (3) are or can be fastened, parallel to each other, by means of clamping device(s) (5) in a region on the surface of the component (4).

9. An arrangement according to one of the preceding claims, **characterised in that** the clamping device(s) is/are produced from a material, the thermal expansion coefficient of which is less than that of the material of the component.

## Revendications

1. Dispositif permettant le contrôle ou l'examen non destructif de pièces au moyen d'une analyse par ondes sonores, comportant une unité électronique de traitement des signaux (1), au moins un transducteur d'ondes sonores (2), au moins un guide d'ondes (3) pour la transmission des ondes sonores vers et/ou à partir d'une pièce (4) à contrôler ou examiner, et au moins un dispositif de serrage (5) pour fixer le guide d'onde (3) respectif à la pièce (4) ; dans lequel dispositif
le/les guide(s) d'ondes (3) est/sont réalisé(s) sous forme de fil ou de fibre et est/sont fixé(s) ou peut/peuvent être fixé(s) par force en appui sur la surface de la pièce (4), à plat dans une zone de détection, sans jeu et parallèlement à la surface de la pièce (4) entre le dispositif de serrage (5) au moyen du dispositif de serrage (5), réalisé sous la forme d'un collier de serrage ou d'une bande de serrage, et
sur le dispositif de serrage est réalisé au moins un contour, dans lequel un guide d'ondes (3) peut être inséré et maintenu en position fixe sur la surface de la pièce (4).

2. Dispositif selon la revendication 1, **caractérisé en ce qu'**un guide d'ondes (3) est constitué par un métal, un alliage métallique, un polymère ou un verre.

3. Dispositif selon l'une quelconque des revendications précédentes, **caractérisé en ce qu'**un guide d'ondes (3) est réalisé dans le matériau de la pièce (4) à examiner ou contrôler ou dans un matériau ayant au moins approximativement la même isolation phonique que le matériau de la pièce (4).

4. Dispositif selon l'une quelconque des revendications précédentes, **caractérisé en ce que** le/les guide(s) d'ondes (3) est/sont relié(s) à un transducteur d'ondes sonores (2) par l'intermédiaire d'un pavillon acoustique exponentiel.

5. Dispositif selon l'une quelconque des revendications précédentes, **caractérisé en ce que** le/les guide(s) d'ondes (3) est/sont déformable(s) par flexion.

6. Dispositif selon l'une quelconque des revendications précédentes, **caractérisé en ce que** le/les guide(s) d'ondes (3) est/sont réalisé(s) dans un matériau homogène sous la forme d'une structure homogène.

7. Installation téléphonique selon l'une quelconque des revendications précédentes, **caractérisé en ce que** le/les guide(s) d'ondes (3) comporte/comportent une surface de section transversale de 0,1 mm² minimum et/ou un diamètre extérieur de 0,25 mm minimum.

8. Dispositif selon l'une quelconque des revendications précédentes, **caractérisé en ce que** plusieurs guides d'ondes (3) sont orientés parallèlement entre eux, sont fixés ou peuvent être fixés au moyen d'un ou de dispositif(s) de serrage (5) dans une zone située sur la surface de la pièce (4).

9. Dispositif selon l'une quelconque des revendications précédentes, **caractérisé en ce que** le/les dispositif(s) de serrage est/sont réalisé(s) dans un matériau ou une matière, dont le coefficient de dilatation thermique est inférieur à celui du matériau de la pièce.
